(19) Europäisches Patentamt
European Patent Office
Office européen des brevets

(11) Veröffentlichungsnummer: **0 017 958**
**B1**

(12) # EUROPÄISCHE PATENTSCHRIFT

(45) Veröffentlichungstag der Patentschrift: **10.11.82**

(51) Int. Cl.³: **C 09 D 3/82**, C 08 L 83/04, C 08 L 83/14

(21) Anmeldenummer: **80102017.3**

(22) Anmeldetag: **15.04.80**

(54) **Zubereitung zur abhäsiven Beschichtung von Backblechen, Backformen, Pfannen, Metalltöpfen und dergleichen.**

(30) Priorität: **24.04.79 GB 7914216**

(43) Veröffentlichungstag der Anmeldung:
**29.10.80 Patentblatt 80/22**

(45) Bekanntmachung des Hinweises auf die Patenterteilung:
**10.11.82 Patentblatt 82/45**

(84) Benannte Vertragsstaaten:
**BE DE FR GB IT NL**

(56) Entgegenhaltungen:
BE-A-678 767
DE-A-2 751 803
FR-A-1 464 216
GB-A-1 083 926
US-A-3 202 542
US-A-3 231 532
US-A-3 801 522

(73) Patentinhaber: **Th. Goldschmidt AG, Goldschmidtstrasse 100, D-4300 Essen (DE)**

(72) Erfinder: **Weitemeyer, Christian, Dr., Schellstrasse 50, D-4300 Essen (DE)**
Erfinder: **Kropác, Vaclav, Sundernholz 62, D-4300 Essen (DE)**
Erfinder: **Priesch, Manfred, Cäcilienhöhe 62, D-4350 Recklinghausen (DE)**

EP 0 017 958 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Zubereitung zur abhäsiven Beschichtung von Backblechen, Backformen, Pfannen, Metalltöpfen und dergleichen

Die Erfindung betrifft eine Zubereitung zur abhäsiven Beschichtung von Backblechen, Backformen, Pfannen, Metalltöpfen und dergleichen, welche überwiegend aus hitzehärtbaren Polysiloxanharzen und mit diesen reaktiven linearen Siloxanen besteht und Härter, Pigmente, Füllstoffe, Netz- und Verlaufmittel sowie Lösungsmittel enthalten kann.

Es ist bekannt, Backbleche, Backformen, Pfannen, Metalltöpfe und Kochgeschirre mit einem Trennmittelüberzug zu versehen, um zu verhindern, dass die in diesen Formen gebackenen oder gekochten, insbesondere zuckerhaltigen Nahrungsmittel ankleben und sich nicht von der Oberfläche der Bleche trennen.

Es sind Trennmittelüberzüge aus Polytetrafluoräthylen bekannt, welches auf die Oberfläche des Bleches, welches meist aus Aluminium oder Weissblech besteht, aufgeschmolzen ist. Diese Beschichtung hat jedoch mehrere Nachteile. Ein wesentlicher Nachteil besteht darin, dass die Aufschmelztemperaturen, die zum Aufbringen des Polytetrafluoräthylens auf die Metalloberfläche notwendig sind, so hoch sind, dass insbesondere Formen aus Aluminium in ihren metallurgischen Eigenschaften beeinflusst werden. Ein weiterer Nachteil besteht in der ungenügenden Härte der Beschichtung, welche dazu führt, dass beim Gebrauch der Formen, Bleche und dergleichen die Polytetrafluoräthylenschicht mechanisch beschädigt wird und das Backgut wiederum zu haften beginnt.

Für die abhäsive Beschichtung von mit Zucker und zuckerhaltigen Lebensmitteln in Kontakt kommenden Blechen hat man auch bereits Organopolysiloxanharze empfohlen.

Das US-A Nr. 3925276 lehrt die Verwendung eines auf besondere Weise erhaltenen Organopolysiloxanharzes mit Silanolgruppen, wobei die Zubereitung zur Beschichtung neben einer Lösung dieses Harzes in Xylol zusätzliche, die Viskosität beeinflussende Lösungsmittel, Eisenoctoat als Härter für das Silikonharz und geringe Mengen eines flüssigen Methylphenylsiloxans enthält. Da das Silikonharz selbst nur ungenügende Trennwirkung aufweist, ist zu vermuten, dass die verhältnismässig guten abhäsiven Eigenschaften nicht unwesentlich von dem zugesetzten flüssigen Siloxan herrühren, welches mit dem Harz nur beschränkt verträglich (mischbar) ist und sich deshalb an der Oberfläche des Harzes anreichert. Nachteilig ist, dass bei mehrmaligem Gebrauch diese in der Oberfläche befindlichen Silikonölanteile entfernt werden und die Trennwirkung im Laufe der Benutzung nachlässt.

In der DE-A Nr. 2700038 wird ein Trennmittel beschrieben, welches von dem durch die US-A Nr. 3925276 gebildeten Stand der Technik ausgeht. Das wesentliche Merkmal dieser DE-A besteht darin, dass dem vorbeschriebenen Silikonharz ausser Silikonöl noch etwa 10 bis 40 Gew.% Fluorkohlenstoffpolymere in feindispergierter Form zugesetzt werden. Die Fluorkohlenstoffpolymerteilchen sind in die feste Matrix des ausgehärteten Silikonharzes eingebunden, so dass auch nach der Entfernung des Silikonöles aus der Oberfläche eine gewisse Langzeitwirkung erhalten bleibt. Ein Nachteil der zugesetzten Fluorkohlenstoffpolymerteilchen besteht jedoch darin, dass insbesondere bei höheren Anteilen wiederum die mechanischen Eigenschaften des Überzuges beeinträchtigt werden.

Aus der GB-A Nr. 1083926 ist für die abhäsive Beschichtung eine Zubereitung bekannt, welche im wesentlichen aus 10 bis 35 Gew.% eines flüssigen Methylpolysiloxans mit wenigstens 2 Gew.% SiH-Gruppen, 65 bis 90 Gew.% eines Kohlenwasserstoffphenylpolysiloxanharzes mit wenigstens 3 Gew.% SiOH-Gruppen und bestimmten Verhältnis von Kohlenwasserstoff: Phenyl: Siliciumverhältnis, sowie Zinnkatalysatoren besteht.

Der Erfindung liegt die Aufgabe zugrunde, Zubereitungen zur abhäsiven Beschichtung von Backblechen, Backformen, Pfannen, Metalltöpfen und dergleichen weiter zu verbessern. Es ist insbesondere erwünscht, geringe Thermoplastizität mit niedrigen Einbrenntemperaturen zu kombinieren.

Die erfindungsgemässe Zubereitung ist dadurch gekennzeichnet, dass sie als hitzehärtbares Siloxanharz ein solches enthält, welches dadurch erhältlich ist, dass man Siloxane der allgemeinen Formel

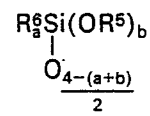

worin:

$OR^5$ eine Alkoxygruppe von primären oder sekundären aliphatischen Alkoholen mit 1 bis 4 C-Atomen,

$R^6$ ein Alkyl- und/oder Phenylrest ist,

a einen Wert von 1,0 bis 1,5,

b einen Wert von 0,1 bis 0,7 hat,

mit niedermolekularen mehrwertigen Alkoholen bei Temperaturen von 100 bis 160°C gegebenenfalls in Gegenwart an sich bekannter Umesterungskatalysatoren und Lösungsmitteln unter Entfernung des Alkohols $R^5OH$ in einem solchen Mengenverhältnis miteinander umsetzt, dass einer $SiOR^5$-Gruppe etwa eine COH-Gruppe entspricht und die Reaktion bei einem Umsetzungsgrad von 25 bis 80% durch Abkühlen auf eine Temperatur < 100°C abbricht

und als reaktives lineares Polysiloxan ein solches der Formel

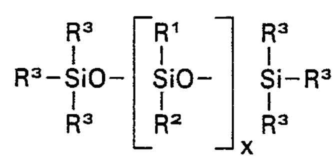

wobei:

$R^1$, $R^2$ gleich oder verschieden sind und einen

Methyl- oder Phenylrest mit der Massgabe bedeuten, dass mindestens 80 mol% dieser Reste Methylreste sind,

$R^3$ gleich oder verschieden sind und die Bedeutung eines Restes oder mehrerer Reste aus der Gruppe

a) Alkylreste mit 1 bis 4 Kohlenstoffatomen,

b) Phenylreste,

c) zur Reaktion mit den kondensationsfähigen Gruppen des härtbaren Polysiloxanharzes befähigte Reste haben, wobei mindestens 1 Rest $R^3$ die Bedeutung c) hat,

x 0 oder eine Zahl $> 0$ ist

in Mengen von 0,05 bis 4 Gew.%, auf Silikonharz bezogen, enthält.

Ein Verfahren zur Herstellung dieser Silikonharze ist in der DE-A Nr. 2828990 beschrieben. Diese Silikonharze weisen hohe Wärmebeständigkeit, Elastizität, Glanzhaltung und Haftung auf dem Untergrund auf. Sie härten mit hoher Geschwindigkeit, sind in besonderem Masse pigmentverträglich und zeigen bei thermischer Belastung nur sehr geringen Gewichtsverlust. Die Aushärtung dieser Harze kann in üblicher Weise durch Katalysatoren, wie z.B. Butyltitanat, Eisen- oder Kobaltoctoat, beschleunigt werden. Die Harze können bei Temperaturen von 300°C und darunter, insbesondere in einem Temperaturbereich von 200 bis 270°C, zu den gewünschten Überzügen ausgehärtet werden.

Als Veresterungskomponente wird vorzugsweise Trimethylolpropan verwendet. Der Rest $R^6$ besteht vorzugsweise aus Alkyl- und Phenylresten, wobei ein Molverhältnis von Methyl- zu Phenylresten von 1:1 bis 4:1 bevorzugt ist. Bei einem Molverhältnis von 2:1 bis 3,5:1 erhält man mechanisch besonders beanspruchbare Filme.

Die erfindungsgemässe Zubereitung enthält das härtbare Silikonharz vorzugsweise entsprechend dem Stand der Technik in einem Lösungsmittel gelöst, dem das reaktive lineare Polysiloxan zugegeben ist.

Vorzugsweise weist das in der erfindungsgemässen Zubereitung enthaltene reaktive lineare Siloxan der Formel

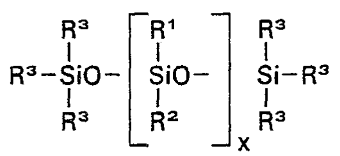

als reaktive Gruppe den Cl-, OH-, LiO- oder $R^4O$-Rest auf, wobei der Rest $R^4$ ein Alkyl- oder Acylrest mit 1 bis 4 Kohlenstoffatomen, vorzugsweise der Methyl- oder Äthylrest ist. Als Acylrest kommt insbesondere der Acetylrest in Frage.

Die Reste $R^1$ und $R^2$ können gleich oder verschieden sein und bedeuten Methyl- oder Phenylreste. Sie müssen der Bedingung entsprechen, dass mindestens 80 mol% dieser Reste Methylreste sind. Vorzugsweise sind mehr als 90 mol% der Reste Methylreste.

Die kettenbegrenzenden Gruppen des reaktiven Polysiloxans sind $R^3$-Gruppen. Mindestens eine Gruppe $R^3$ muss dabei zur Reaktion mit den kondensationsfähigen Gruppen des härtbaren Polysiloxanharzes befähigt sein. Es können somit auch mehr als eine Gruppe $R^3$, z.B. zwei, drei oder alle Gruppen $R^3$ diese Bedeutung haben. Es genügt jedoch bereits, wenn eine Gruppe $R^3$ zur Reaktion mit den kondensationsfähigen Gruppen des härtbaren Polysiloxanharzes befähigt ist. Bevorzugt werden aber Verbindungen, die zwei oder mehr solcher reaktiver Reste enthalten. Die übrigen Reste an den kettenbegrenzenden Si-Atomen sind Alkylreste mit 1 bis 4 C-Atomen und/oder Phenylreste. Alkylreste sind jedoch bevorzugt.

Der Index x kann 0 sein. Bevorzugt hat jedoch x einen Wert $> 0$, insbesondere einen Wert von 10 bis 500, vorzugsweise von 15 bis 150.

Beispiele solcher reaktiven Polysiloxane sind

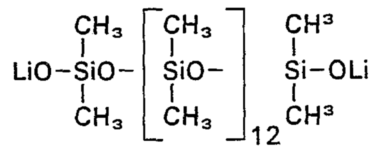

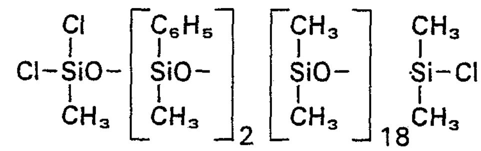

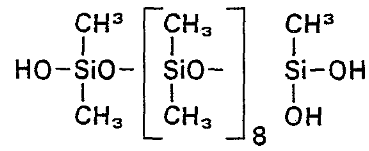

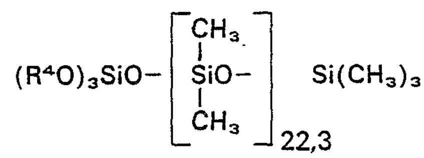

$R^4 = C_2H_5-$

Dieser Zubereitung kann man in an sich bekannter Weise Härter, wie z.B. Butyltitanat oder Zinnoctoat, Pigmente und Füllstoffe, wie z.B. Titanoxid oder Russ, sowie Netz- und Verlaufmittel, wie z.B. Lecithin oder Äthylcellulose, in den bekannten Mengen zusetzen.

Die Zubereitungen werden auf den zu beschichtenden Untergrund aufgespritzt, aufgerakelt, aufgestrichen oder getaucht und dann eingebrannt, wobei sich die Einbrenntemperatur nach der Art des Harzes und des gegebenenfalls zugesetzten Katalysators richtet. Man erzielt auf diese Weise eine Beschichtung mit einer Schichtdicke von etwa 10 bis 40 µm.

Der Gegenstand vorliegender Erfindung soll im folgenden durch Beispiele näher erläutert werden:

Es werden zunächst in an sich bekannter Weise vier Harze A, B, C und D hergestellt, wobei die Harze A und B dem in der erfindungsgemässen Zubereitung enthaltenen Harz entsprechen. Die Harze C und D sind unmodifizierte siliciumorganische Harze.

Harz A:

1000 g eines Alkoxypolysiloxans, das aus

80 mol% Phenyltrichlorsilan, 15 mol% Dimethyldichlorsilan und 5 mol% Trimethylchlorsilan in an sich bekannter Weise durch Cohydrolyse hergestellt worden ist und 7,4 Gew.% an Silicium gebundene Methoxygruppen aufweist, 63,9 g Trimethylolpropan, 14,8 g Äthylenglykol, 0,2 g Butyltitanat und 1000 g Xylol werden in einer Destillationsapparatur vorgelegt und unter Rühren aufgeheizt. Bei 125° C beginnt die Reaktion, das entstandene Methanol destilliert im Gemisch mit Xylol ab. Die Temperatur steigt weiter bis auf 140° C. Die Reaktionszeit beträgt 1 h. Wenn die gewünschte Viskosität des Reaktionsgemisches erreicht ist, wird die Reaktion durch Abkühlen und Verdünnen des Reaktionsproduktes mit Xylol auf 50% Festkörper beendet. Der Reaktionsumsatz, berechnet nach der Menge des abdestillierten Methanols, beträgt 38%. Das Endprodukt weist eine Viskosität von $4,6 \times 10^{-4}$ $m^2 \cdot s^{-1}$ bei 25° C auf.

Harz B:
1000 g eines Alkoxypolysiloxans, das aus 35 mol% Methyltrichlorsilan, 5 mol% Dimethyldichlorsilan und 60 mol% Phenyltrichlorsilan in an sich bekannter Weise durch Cohydrolyse hergestellt worden ist und 10 Gew.% an Silicium gebundene Äthoxygruppen aufweist, 99 g Trimethylolpropan, 0,2 g Butyltitanat und 1000 g Xylol werden in einer Destillationsapparatur vorgelegt und unter Rühren aufgeheizt. Bei 125° C beginnt die Reaktion, das entstandene Äthanol destilliert im Gemisch mit Xylol ab. Die Temperatur steigt weiter bis aus 140° C. Die Reaktionszeit beträgt 1 h. Wenn die gewünschte Viskosität des Reaktionsgemisches erreicht ist, wird die Reaktion durch Kühlen und Verdünnen des Reaktionsproduktes mit Xylol auf 50% Festkörper beendet. Der Reaktionsumsatz, berechnet nach der Menge des abdestillierten Äthanols, beträgt 46%. Das Endprodukt weist eine Viskosität von $8,9 \times 10^{-4}$ $m^2 \cdot s^{-1}$ bei 25° C auf.

Harz C:
Ein aus 526 Gew.-Teilen Methyltrichlorsilan, 436 Gew.-Teilen Phenyltrichlorsilan und 38 Gew.-Teilen Dimethyldichlorsilan nach im US-A Nr. 3925276 beschriebenem Verfahren hergestelltes Polysiloxan wird mit Xylol auf einen Festkörpergehalt von 50% verdünnt. Zu 100 Gew.-Teilen Harz werden 0,8 Gew.-Teile Fe-Octoat zugefügt.

Harz D:
Ein aus 414 Gew.-Teilen Methyltrichlorsilan und 586 Gew.-Teilen Phenyltrichlorsilan nach im US-A Nr. 3925276 beschriebenem Verfahren hergestelltes Polysiloxan wird mit Xylol auf 50% Festkörper verdünnt. Zu 100 Gew.-Teilen Harz werden 0,8 Gew.-Teile Fe-Octoat zugefügt.

*Herstellung und Verwendung der Zubereitungen*

*Beispiele 1-6 erfindungsgemäss*

*Beispiel 1*

100 Gew.-Teile Siloxanharz A werden mit 0,4 Gew.-Teilen

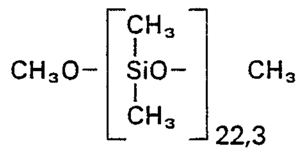

vermischt und unter Rühren mit 0,5 Gew.-Teilen $(BuO)_4Ti$-Katalysator versetzt. Das Harz wird mit einer Drahtrakel auf mit Bonder 1400 Al vorbehandelten Aluminiumblechen aufgetragen und bei 270° C während 10 min ausgehärtet. Die ausgehärtete Beschichtung hat eine Dicke von ca. 30 μm.

*Beispiel 2*

100 Gew.-Teile Siloxanharz A werden mit 3 Gew.-Teilen

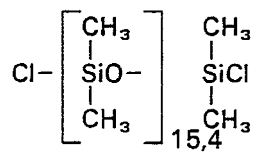

unter Rühren 5 min bei 120° C umgesetzt. Danach wird mit $NaHCO_3$, neutralisiert und anschliessend filtriert. Das Reaktionsprodukt wird dann in der in Beispiel 1 beschriebenen Weise ausgehärtet.

*Beispiel 3*

100 Gew.-Teile der Zubereitung gemäss Beispiel 2 werden mit $TiO_2$ pigmentiert (Gewichtsverhältnis Bindemittel: $TiO_2 \cong 1:0,33$). Dann werden 0,4 Gew.-Teile Äthylcellulose zugemischt und, wie in Beispiel 1 beschrieben, ausgehärtet.

*Beispiel 4*

100 Gew.-Teile Siloxanharz A werden mit 0,15 Gew.-Teilen

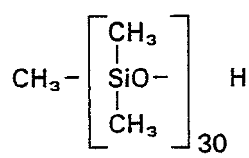

vermischt und unter Rühren mit 0,5 Gew.-Teilen $(BuO)_4Ti$-Katalysator vermischt. Danach wird, wie in Beispiel 1 beschrieben, ausgehärtet.

*Beispiel 5*

100 Gew.-Teile Siloxanharz A werden mit 0,05 Gew.-Teilen

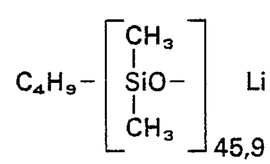

vermischt und in der in Beispiel 1 beschriebenen Weise ausgehärtet.

*Beispiel 6*

100 Gew.-Teile Siloxanharz B und 0,15 Gew.-Teile

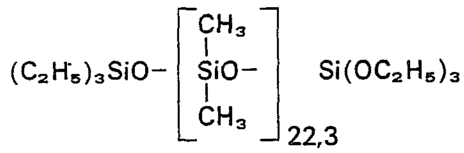

werden vermischt und in der in Beispiel 1 beschriebenen Weise ausgehärtet.

*Beispiele 7-9 nicht erfindungsgemäss*

*Beispiel 7*

100 Gew.-Teile Siloxanharz D werden mit 0,3 Gew.-Teilen

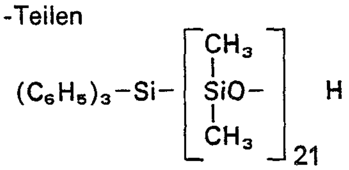

vermischt und in der in Beispiel 1 beschriebenen Weise ausgehärtet.

*Beispiel 8*

100 Gew.-Teile Siloxanharz C und 0,2 Gew.-Teile

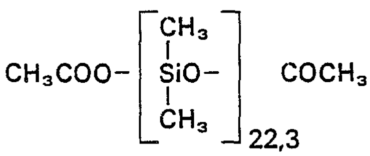

werden vermischt und in der in Beispiel 1 beschriebenen Weise ausgehärtet.

*Beispiel 9*

100 Gew.-Teile Siloxanharz C werden mit 2,5 Gew.-Teilen Silikonöl 81950 (der Firma General Electric) vermischt und, wie in Beispiel 1 beschrieben, ausgehärtet.

*Anwendungstechnische Prüfungen der erfindungsgemässen Zubereitung und der nicht erfindungsgemässen Vergleichszubereitung*

Es werden runde Plätzchen mit einem Durchmesser von etwa 5 bis 6 cm aus einer Nusskuchenfertigmischung in einem Heissluftofen bei 180°C während 12 bis 15 min gebacken. Nach Abkühlen 30 bis 40°C werden die Plätzchen seitwärts vom Blech geschoben.

Die Beurteilung wird durch Feststellung der haftengebliebenen Menge in Gew.% vorgenommen.

Sehr gut: kein Rückstand
Gut: Rückstand bis 10%
Befriedigend: Rückstand von > 10% bis 30%
Schlecht: Rückstand > 30%

Der Backvorgang wird auf denselben Blechen zehnmal wiederholt. Nach jedem Backvorgang werden die Bleche in einer 2%igen Detergentienlösung bei 40°C gespült und gut mit Wasser gewaschen.

Die Messergebnisse sind in der folgenden Tabelle zusammengestellt:

| Beispiel | Siloxanharz | Backvorgänge | | |
|---|---|---|---|---|
| | | 1 | 5 | 10 |
| 1 | A | sehr gut | sehr gut | sehr gut |
| 2 | A | sehr gut | sehr gut | sehr gut |
| 3 | A | sehr gut | sehr gut | sehr gut |
| 4 | A | sehr gut | sehr gut | sehr gut |
| 5 | A | sehr gut | sehr gut | sehr gut |
| 6 | B | sehr gut | sehr gut | sehr gut |
| 7 | D | sehr gut | gut | gut |
| 8 | C | sehr gut | sehr gut | gut |
| 9 | C | sehr gut | befriedigend | schlecht |

Beispiele 1-6 erfindungsgemäss
Beispiele 7-9 nicht erfindungsgemäss

## Patentansprüche

1. Zubereitung zur abhäsiven Beschichtung von Backblechen, Backformen, Pfannen, Metalltöpfen und dergleichen, welche überwiegend aus hitzehärtbaren Polysiloxanharzen und mit diesen reaktiven linearen Siloxanen besteht, dadurch gekennzeichnet, dass sie als hitzehärtbares Siloxanharz ein solches enthält, welches dadurch erhältlich ist, dass man Siloxane der allgemeinen Formel

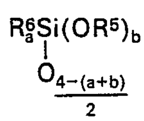

worin:

$OR^5$ eine Alkoxygruppe von primären oder sekundären aliphatischen Alkoholen mit 1 bis 4 C-Atomen,

$R^6$ ein Alkyl- und/oder Phenylrest ist,

a einen Wert von 1,0 bis 1,5,

b einen Wert von 0,1 bis 0,7 hat,

mit niedermolekularen mehrwertigen Alkoholen bei Temperaturen von 100 bis 160°C gegebenenfalls in Gegenwart an sich bekannter Umesterungskatalysatoren und Lösungsmitteln unter Entfernung des Alkohols $R^5OH$ in einem solchen Mengenverhältnis miteinander umsetzt, dass einer $SiOR^5$-Gruppe etwa eine COH-Gruppe entspricht

und die Reaktion bei einem Umsetzungsgrad von 25 bis 80% durch Abkühlen auf eine Temperatur < 100° C abbricht

und als reaktives lineares Polysiloxan ein solches der Formel

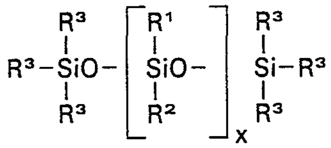

wobei:

$R^1$, $R^2$ gleich oder verschieden sind und einen Methyl- oder Phenylrest mit der Massgabe bedeuten, dass mindestens 80 mol% dieser Reste Methylreste sind,

$R^3$ gleich oder verschieden sind und die Bedeutung eines Restes oder mehrerer Reste aus der Gruppe

a) Alkylreste mit 1 bis 4 Kohlenstoffatomen,

b) Phenylreste,

c) zur Reaktion mit den kondensationsfähigen Gruppen des härtbaren Polysiloxanharzes befähigte Reste haben, wobei mindestens 1 Rest $R^3$ die Bedeutung c) hat,

x 0 oder eine Zahl > 0 ist

in Mengen von 0,05 bis 4 Gew.%, auf Silikonharz bezogen, enthält.

2. Zubereitung nach Anspruch 1, dadurch gekennzeichnet, dass sie als hitzehärtbares Siloxan ein solches enthält, bei dessen Herstellung man als niedermolekularen mehrwertigen Alkohol Trimethylolpropan verwendet.

**Revendications**

1. Préparation pour le revêtement non adhérent de plaques pour four, de moules à pâtisserie, de poêles, de marmites métalliques et d'objets analogues, qui est constituée pour la plus grande partie de résines polysiloxanes thermodurcissables et de siloxanes linéaires réactifs avec celles-ci, caractérisée en ce qu'elle contient, comme résine de siloxane thermodurcissable, une telle résine qui peut être obtenue en ce que l'on fait réagir des siloxanes de la formule générale

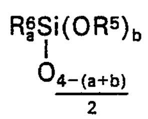

dans laquelle

$OR^5$ est un groupe alcoxy d'alcools primaires ou secondaires aliphatiques avec 1 à 4 atomes de carbone,

$R^6$ un reste alcoyle et/ou phényle,

a a une valeur de 1,0 à 1,5,

b une valeur de 0,1 à 0,7,

avec des alcools polyvalents de bas poids moléculaire à des températures de 100 à 160° C, le cas échéant, en présence de catalyseurs de transestérification et de solvants connus en soi, avec élimination de l'alcool $R^5OH$, en un rapport de quantité entre eux tel qu'un groupe $SiOR^5$ correspond à peu près à un groupe COH et que l'on arrête la réaction pour un taux de transformation de 25 à 80% par refroidissement à une température < 100° C,

et en ce qu'elle contient comme polysiloxane linéaire réactif un polysiloxane de formule

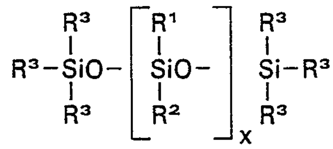

dans laquelle

$R^1$, $R^2$ sont identiques ou différents et signifient un reste méthyle ou phényle, sous réserve qu'au moins 80 mol% de ces restes sont des restes méthyles,

$R^3$ sont identiques ou différents et ont la signification d'un reste ou de plusieurs restes choisis dans le groupe:

a) restes alcoyles avec 1 à 4 atomes de carbone,

b) phényles,

c) des restes capables de réagir avec les groupes capables de condensation de la résine polysiloxane durcissable, 1 reste $R^3$ au moins ayant la signification c,

x est 0 ou un nombre > 0.

en quantités de 0,05 à 4% en poids, par rapport à la résine de silicone.

2. Préparation selon la revendication 1, caractérisée en ce qu'elle contient, comme siloxane thermodurcissable, un siloxane tel que, dans sa préparation, on utilise comme alcool polyvalent à faible poids moléculaire le triméthylolpropane.

**Claims**

1. Formulation for the non-stick coating of baking trays, baking tins, pans, metal pots and the like, which predominantly consists of heat-curable polysiloxane resins and linear siloxanes which are reactive with the former, characterized in that it contains, as the heat-curable siloxane resin, a resin which is obtainable by reacting siloxanes of the general formula

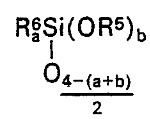

in which $OR^5$ is an alkoxy group of primary or secondary aliphatic alcohols having 1 to 4 C atoms, $R^6$ is an alkyl radical and/or phenyl radical, a has a value from 1.0 to 1.5 and b has a value from 0.1 to 0.7, with low-molecular polyhydric alcohols at temperatures from 100 to 160° C, if appropriate in the presence of solvents and transesterification catalysts known per se, with removal of the alcohol $R^5OH$, in such a quantitative ratio that approximately one COH group corresponds to one $SiOR^5$ group, and stopping the reaction at a degree of conversion of from 25 to 80% by cooling to a temperature of < 100° C, and contains, as the reactive linear polysiloxane, a polysiloxane of the formula

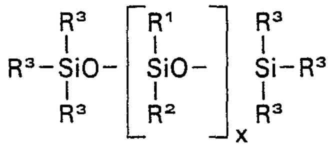

wherein $R^1$ and $R^2$ are identical or different and denote a methyl or phenyl radical, with the proviso that at least 80 mol% of these radicals are methyl radicals, the $R^3$ are identical or different and have the meaning of one radical or several radicals from the group comprising

a) alkyl radicals having 1 to 4 carbon atoms,

b) phenyl radicals,

c) radicals which are capable of reacting with those groups of the curable polysiloxane resin which are capable of condensation, at least one radical $R^3$ having the meaning of c), and x is 0 or a number $> 0$, in quantities from 0.05 to 4% by weight, relative to silicone resin.

2. Formulation according to claim 1, characterized in that it contains, as the heat-curable siloxane, a siloxane in the preparation of which trimethylolpropane is used as the low-molecular polyhydric alcohol.